# EUROPÄISCHE PATENTSCHRIFT

(11) **EP 0 762 424 B1**
(45) Veröffentlichungstag und Bekanntmachung des Hinweises auf die Patenterteilung: **21.09.2005**
(21) Anmeldenummer: 96112180.3
(22) Anmeldetag: 27.07.1996
(51) Int. Cl.: G11B 27/32, G11B 27/13, G11B 27/10, G11B 15/087, G11B 27/024

(54) **Korrektur der Bandzähleinrichtung eines Recorders**
Correction of the tape counting device of a recorder
Correction du dispositif de comptage de bande d'appareil d'enregistrement

(30) Priorität: 07.08.1995 DE 19528955
(43) Veröffentlichungstag der Anmeldung: 12.03.1997
(73) Patentinhaber: DEUTSCHE THOMSON-BRANDT GMBH, 78048 Villingen-Schwenningen (DE)
(72) Erfinder: Link, Hermann, 78166 Donaueschingen (DE); Macé, Philippe, 78078 Kappel (DE); Marzluf, Axel, 78052 Villingen-Schwenningen (DE)
(74) Vertreter: Arnold, Klaus-Peter

(56) Entgegenhaltungen:
- WO-A-81/01902
- WO-A-85/03797
- WO-A-94/16442
- US-A- 3 950 782
- US-A- 4 591 931
- PATENT ABSTRACTS OF JAPAN vol. 12, no. 51 (P-667), 16.Februar 1988 & JP-A-62 197980 (VICTOR CO. OF JAPAN, LTD), 1.September 1987,
- PATENT ABSTRACTS OF JAPAN vol. 16, no. 131 (P-1332), 3.April 1992 & JP-A-03 292655 (MITSUBISHI ELECTRIC CORP.), 24.Dezember 1991,

## Beschreibung

Die Erfindung betrifft ein Informationen aufzeichnendes und/oder wiedergebendes Gerät, insbesondere einen Videorecorder, mit einer Bandzähleinrichtung und einer Auswertung von auf dem bandförmigen Speicherträger aufgezeichneten Markierungen für Steuerungszwecke.

Es ist bekannt, bei auf Videobändern aufgezeichneten Informationen den Anfang einer Aufzeichnung zu markieren, um diesen Anfang gezielt anfahren zu können. Der Start der Wiedergabe kann somit beschleunigt werden.

Es ist ferner bekannt, neben einer derartigen Anfangsmarkierung weitere Markierungen zu setzen, die ebenfalls gezielt angefahren werden können und mit denen sich bestimmte Szenen bzw. Abschnitte innerhalb einer Aufzeichnung kennzeichnen und beschleunigt anfahren lassen. Solche abschnittsweisen Markierungen ermöglichen eine selektive Wiedergabe ausgewählter Teile einer Aufzeichnung, z. B. wenn bei Wiedergabe eines aufgezeichneten Fernsehprogramms Werbeeinblendungen gezielt übersprungen werden sollen oder wenn zum Zusammenschnitt einzelner selbstaufgezeichneter Szenen nur vorher ausgewählte Teile dieser Szenen automatisch auf ein anderes Gerät überspielt werden sollen.

Dazu werden die abschnittsweise zu markierenden Stellen auf dem Aufzeichnungsträger mit der Bandzähleinrichtung des Gerätes ermittelt und jeweils als Zahlenwerte, die z. B. Band-Laufzeitangaben entsprechen können, in einem Schreib/Lesespeicher des Gerätes abgespeichert. Mit Hilfe der abgespeicherten Zahlenwerte und der Bandzähleinrichtung können dann die zu markierenden Bandstellen in einem anschliessenden Markiermodus automatisch angefahren und auf dem Band z.B. durch Modulation der Kontrollspur markiert werden. Die Ansteuerung der Bandzähleinrichtung erfolgt dabei jeweils durch das in der Längsspur des Videobandes z.B. aufgezeichnete Bildsynchronsignal, auch Kontroll- bzw. CTL-Impuls genannt.

Aufgrund von schlechtem Bandkopfkontakt oder Bandbeschädigungen kann es jedoch vorkommen, daß die jeweiligen Bandzählerstände ausgewählter Teile einer Aufzeichnung nach z.B. mehrmaligem Umspulen nicht mehr mit den zuvor ermittelten und abgespeicherten Bandzählerständen übereinstimmen. Damit wird das Auffinden zu markierender sowie auch bereits markierter Bandstellen ausgewählter Teile einer Aufzeichnung erschwert.

Ein Gerät nach dem Oberbegriff des Anspruchs 1 ist aus der WO-A-8101902 bekannt.

Der Erfindung liegt daher die Aufgabe zugrunde, das Auffinden ausgewählter Teile einer Aufzeichnung zu verbessern.

Diese Aufgabe wird durch die im Patentanspruch 1 angegebenen Merkmale gelöst. Vorteilhafte Aus- und Weiterbildungen sind in den Unteransprüchen angegeben.

Der Erfindung liegt die Idee zugrunde, einen Suchlauf bzw. ein beschleunigtes selektives Anfahren zur Wiedergabe ausgewählter Teile einer Aufzeichnung mittels Bandzähleinrichtung und entsprechender abgespeicherter Bandzählerstandswerte von einer Bezugsmarkierung ausgehen bzw. starten zu lassen. Handelt es sich dabei um eine Aufzeichnung gemäß dem VHS-Index-Search-System (VISS), so wird vorzugsweise die den Aufzeichnungsanfang kennzeichnende VISS-Markierung als Bezugsmarkierung verwendet.

Zur Detektion einer derartigen Bezugsmarke ist erfindungsgemäß ein Toleranzfenster vorgesehen, innerhalb welchem das Auftreten dieser Bezugsmarke erwartet wird. Die Position der Bezugsmarke wurde vor dem Festlegen der zu markierenden Bandstellen ebenfalls in Form eines Bandzählerstandes abgespeichert. Durch dieses Toleranzfenster wird in vorteilhafter Weise dem Verlust einiger CTL-Impulse sowie Zählfehlern der Bandzähleinrichtung des Gerätes Rechnung getragen.

Ist die Bezugsmarke detektiert, können die weiteren markierten Stellen auf dem Aufzeichnungsträger, für die bei einem vorherigen Markierungsvorgang entsprechende Bandzählerstandswerte abgespeichert wurden, mittels der Bandzähleinrichtung präzise angefahren werden, d.h., daß es hinsichtlich der jeweiligen markierten Bandstellen keinen Versatz mehr zwischen der Aufzeichnung und der selektiven bzw. einer nachträglichen Wiedergabe gibt.

Die Erfindung hat außerdem den Vorteil, daß kein zusätzlicher Schaltungsaufwand erforderlich ist. Im Prinzip ist die Software heutiger Rekorder mit Video-Index-Search- und/oder Video-Address-Search-System lediglich um die Anweisung zu ergänzen, die Bezugsmarkierung zu detektieren und die Laufwerksteuerung zum anschließenden Anfahren markierter Bandstellen mittels der Bandzähleinrichtung und entsprechender abgespeicherter Bandzählerstandswerte von dieser Bezugsmarkierung ausgehen zu lassen.

Nachfolgend wird die Erfindung anhand der Zeichnung näher erläutert. Darin zeigen
- Fig. 1: einen erfindungsgemäßen Videorecorder mit einem bandförmigen Aufzeichnungsträger und Markierungen für den Aufzeichnungsträger;
- Fig. 2: einen bekannten Videorecorder mit dem bandförmigen Aufzeichnungsträger und den Markierungen gemäß Fig 1;
- Fig. 3: ein Flußdiagramm zur Erläuterung der erfindungsgemäßen Funktion des Videorecorders gemäß Fig. 1.

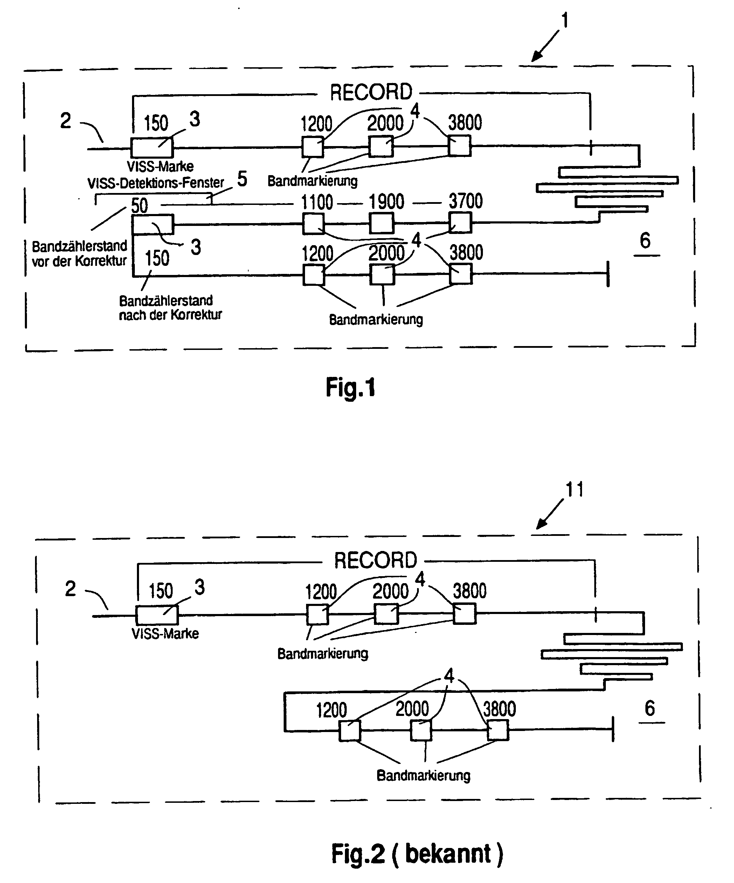

Fig. 1 zeigt symbolisch einen VHS-Videorecorder 1 mit einem in einer Kassette gelagerten bandförmigen Aufzeichnungsträger, im folgenden Band 2 genannt. Das Band 2 weist neben einer den Beginn einer Aufzeichnung markierenden VISS-Marke 3 weitere vorläufige Markierungen 4 auf, deren jeweilige Positionen z.B. in Form von Bandzählerstandwerten ebenfalls während der Aufzeichnung in einem Schreib/Lesespeicher abgespeichert werden und bestimmte, z.B. nicht interessierende Abschnitte wie während des Aufzeichnungsbetriebes des Recorders 1 eingeblendete Werbeblöcke markieren.

Den Markierungen 3 und 4 sind somit jeweils entsprechende Zählerstände (hier Zahlen 150 bzw. 1200, 2000 und 3800) der nicht dargestellten Bandzähleinrichtung des Recorders 1 zugeordnet. Diese Zählerstände, die vorzugsweise jeweils auf der Zählung von CTL-Impulsen beruhen, werden während des Aufzeichnungsbetriebes ermittelt und z.B. in einem RAM-Speicher des Recorders 1 abgespeichert. Das Ermitteln und Abspeichern der jeweiligen Zählerstände einschließlich des Markierens z.B. nicht interessierender Aufzeichnungsabschnitte durch derartige Markierungen 4 kann auch manuell, z.B. mittels einer im Recorder 1 vorgesehenen Eingabetastenfunktion, bei nachträglicher Wiedergabe der Aufzeichnung erfolgen.

Nicht interessierende Aufzeichnungsabschnitte können gezielt übersprungen werden, z.B. dadurch, daß der Recorder 1 mittels der abgespeicherten Zählerstände und der Steuereinrichtung für den Band- oder Wickelantrieb automatisch in den schnellen Vorlaufbetrieb bzw. Umspulbetrieb umschaltet. Die Steuereinrichtung ist ebenso wie die Bandzähleinrichtung nicht dargestellt; derartige Einrichtungen des Recorder sind hinlänglich bekannt, so daß auf diese nur insoweit eingegangen wird, wie es die Erfindung betrifft.

Um auch nach weiteren Bandbetätigungen, insbesondere nach Umspulungen mit wechselnder Bandlaufrichtung, wie mit dem mäanderartig gefalteten Bandbereich 6 symbolisch dargestellt, die Bandstellen 3, 4 präzise anfahren zu können, wird erfindungsgemäß das Band 2 zunächst bis zu einem Zählerstand umgespult, welcher dem der VISS-Marke 3 zugeordneten abgespeicherten Zählerstand entspricht, wobei die Detektion der VISS-Marke 3 als Bezugs- und/oder Ausgangsmarkierung Voraussetzung für das eigentliche präzise Anfahren der übrigen, den Markierungen 4 entsprechenden Bandstellen ist. Aufgrund möglichen Verlustes einiger CTL-Impulse und/oder von Zählfehlern der Bandzähleinrichtung, insbesondere infolge wechselnder Bandlaufrichtung oder Bandbeschädigungen, ist ein Toleranzfenster 5 vorgesehen, innerhalb welchem das Auftreten der VISS-Marke 3 erwartet wird und innerhalb welchem dann, anstelle des der VISS-Marke 3 zugeordneten abgespeicherten Zählerstandes, die VISS-Marke 3 selbst Suchlaufkriterium ist. Die Fensterbreite und -lage sind vorgebbar. Damit kann bei der Detektion der VISS-Marke 3 eine bestimmte Anzahl von CTL-Impulsverlusten und/oder Zählfehlern toleriert werden bzw. sich nicht auswirken. Als Fensterbreite 5 hat sich eine Dauer als günstig erwiesen, die etwa dem Bildinhalt bei etwa 4-minütiger Normalwiedergabe entspricht. Dieses Fenster 5 ist vorzugsweise symmetrisch zur VISS-Marke 3 angeordnet, so daß sich zu beiden Seiten dieser als Bezugs- und/oder Ausgangsmarkierung verwendeten Marke 3 die halbe bzw. eine einer 2-minütigen Normalwiedergabe entsprechende Fensterbreite ergibt

Sobald die VISS-Marke 3 detektiert ist, wird der Zählerstand für die VISS-Marke 3 erneut bzw. auf den Wert gesetzt (im vorliegenden Fall auf die Zahl 150), der mit dem Setzen der VISS-Marke 3 ermittelt wurde und der z.B. dem Beginn der Aufzeichnung entspricht. Damit sind alter und neuer Zählerstand auch hinsichtlich dieser Bandposition bzw. Bandstelle identisch. Von diesem Zählerstand (Zahl 150) aus und durch Vergleich aktueller Zählerstände mit den abgespeicherten Zählerständen, die den Bandpositionen für die durch Markierungen 4 gekennzeichneten Aufzeichnungsabschnitte zugeordnet sind, können dann Anfang und/oder Ende solcher Aufzeichnungsabschnitte präzise angefahren werden. Wie bereits angesprochen, können von diesem Zählerstand (Zahl 150) aus auch nachträglich derartige Markierungen 4 vorgenommen werden, z.B. in ähnlicher Weise wie bei einer VISS-Marke 3 mit einer bestimmten sich z.B. von der VISS-Marke 3 unterscheidenden Anzahl von Kontroll(CTL)-Impulsen mit geändertem Puls/Pausen-Verhältnis, wenn z.B. noch keine entsprechenden Markierungen zur Kennzeichnung bestimmter Abschnitte oder Szenen in einer Aufzeichnung vorhanden sind oder wenn z.B. andere bzw. weitere Abschnitte oder Szenen in dieser Aufzeichnung markiert werden sollen.

Die VISS-Marke 3 bildet somit eine Bezugs- und/oder Ausgangsmarkierung zum präzisen Anfahren der weiteren, den abschnittsweisen Markierungen 4 entsprechenden Bandstellen, und solange dabei Aufzeichnungsabschnitte in der sich durch die Aufzeichnung ergebenden Reihenfolge angefahren und/oder übersprungen werden, ist für alle Abschnitte eine einzige Detektion der VISS-Marke 3 als Bezugsmarkierung ausreichend.

Durch die erfindungsgemäße Verwendung der VISS-Marke 3 als Bezugs-und/oder Ausgangsmarkierung wird erreicht, daß - im Gegensatz zu dem in Fig. 2 dargestellten bekannten Recorder 11 - stets sämtliche markierten Bandstellen präzise angefahren werden können. Wie in Fig. 2 mit dem Versatz übereinanderliegend gezeichneter gleicher Markierungen bzw. gleicher Bandzählerwerte (Zahlen 1200, 2000 und 3800) symbolisch dargestellt, ist bei dem bekannten Recorder 11 nach Umspulungen mit wechselnder Bandlaufrichtung, wie mit dem mäanderartig gefalteten Bandbereich 6 symbolisch dargestellt, damit zu rechnen, daß die mit den Markierungen 3 und 4 versehenen Bandstellen nicht erreicht werden, obwohl der jeweilige angezeigte Zählerstand (Zahlen 1200, 2000 und 3800) mit dem jeweiligen abgespeicherten Wert übereinstimmt, der bei Aufzeichnung oder nachträglicher selektiver Wiedergabe ermittelt wurde. Tatsächlicher Anfang und/oder tatsächliches Ende markierter Aufzeichnungsabschnitten müssen dann manuell, mittels Suchlauffunktion des Recorders 11 bestimmt werden.

Die entsprechenden Steuerungsabläufe für das erfindungsgemäße Verfahren und das Toleranzfenster 5 sind vorzugsweise mit der Software für die Ablaufsteuerung des Recorderlaufwerks realisiert. Es versteht sich, daß die Steuerungsabläufe für das erfindungsgemäße Verfahren sowie das Toleranzfenster 5 aber auch hardware-mäßig realisiert werden können.

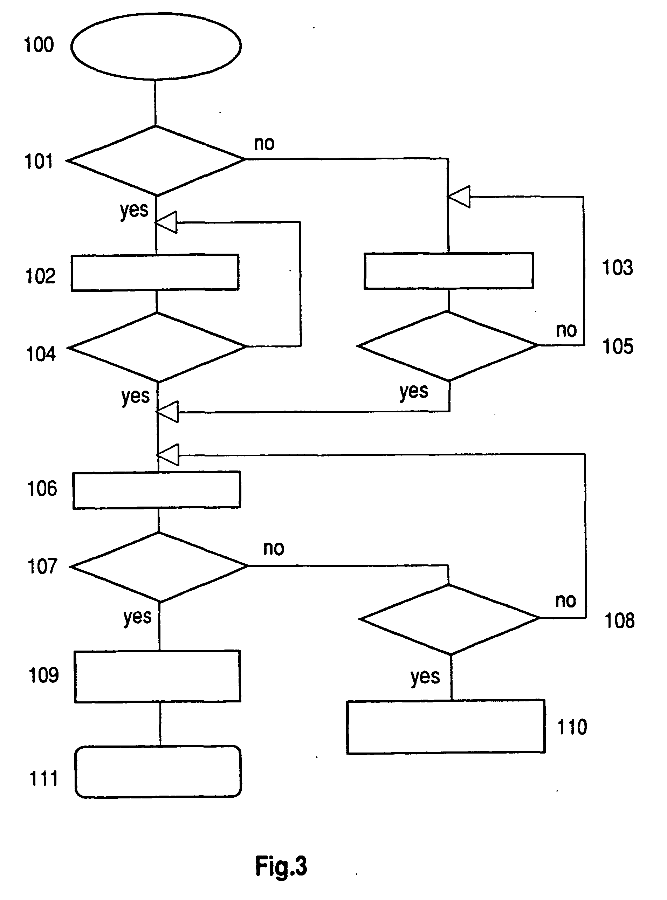

In Fig. 3 wird die erfindungsgemäße Funktion des Videorecorders gemäß Fig. 1 anhand eines Flußdiagramms erläutert.

Nach dem Start gemäß Schritt 100 werden aktueller bzw. laufender Bandzählerstand und der Bezugsmarkierung 3 zugeordneter Bandzählerstand miteinander verglichen und gemäß Schritt 101 dabei abgefragt, wie weit die jeweilige ermittelte Bandposition bzw. der jeweilige dieser Bandposition entsprechende Bandzählerstand noch vom Bandzählerstand einer Zielposition entfernt ist, die der Bandposition bzw. dem Bandzählerstandswert der Bezugsmarkierung 3 entspricht.

Ergibt der Vergleich bzw. eine entsprechende Messung dabei, daß der der aktuellen Bandposition entsprechende Bandzählerstand größer als der Bandzählerstandswert der Bezugsmarkierung 3 plus einer einer 2-minütigen Normalwiedergabe entsprechenden Bandzählerstandsdifferenz ist, steuert die bereits erwähnte nicht dargestellte Laufwerksteuereinrichtung den Bandwickelantrieb gemäß Schritt 102 auf Rückspulen, wobei, wie mit Schritt 104 dargestellt, solange rückgespult wird, bis der Unterschied zwischen aktueller Bandposition und Zielposition bzw. bis die Differenz zwischen dem der aktuellen Bandposition entsprechenden Bandzählerstand und dem Bandzählerstandswert der Zielposition gleich/geringer als die der 2-minütigen Normalwiedergabe entsprechenden Bandzählerstandsdifferenz wird.

Die zwei Minuten zur Zielposition bzw. die der 2-minütigen Normalwiedergabe entsprechende Bandzählerstandsdifferenz bilden dabei die halbe Fensterbreite des in Fig. 1 dargestellten Toleranzfensters 5.

Ergibt der Vergleich gemäß Schritt 101 jedoch, daß der der aktuellen Bandposition entsprechende Bandzählerstand kleiner als der Bandzählerstandswert der Zielposition plus der der 2-minütigen Normalwiedergabe entsprechenden Bandzählerstandsdifferenz ist, steuert die Laufwerksteuereinrichtung den Bandwickelantrieb gemäß Schritt 103 auf Vorspulen, wobei, wie mit Schritt 105 dargestellt, solange vorgespult wird, bis der Unterschied zwischen aktueller Bandposition und Zielposition bzw. bis die Differenz zwischen dem der aktuellen Bandposition entsprechenden Bandzählerstand und dem Bandzählerstandswert der Zielposition gleich/größer als die der 2-minütigen Normalwiedergabe entsprechenden Bandzählerstandsdifferenz wird.

Die sich daran anschließende Suche bzw. Detektion der Bezugsmarkierung 3 kann somit dann nur von einer Fensterseite des Toleranzfensters 5 her erfolgen (hier vorzugsweise die Fensterseite mit dem größeren Bandzählerstandswert, da die Bezugsmarkierung 3 wohl überwiegend jeweils am Anfang einer Aufzeichnung plaziert werden wird) und zwar unabhängig davon, von welcher Bandposition aus der Start gemäß Schritt 100 erfolgt ist. Diese Vorgehensweise hat den Vorteil, daß auf einfache Weise sichergestellt wird, daß man nach Start gemäß Schritt 100 in jedem Falle in die in Frage kommende Aufzeichnung gelangt und damit eine eventuelle Detektion von Markierungen anderer auf dem Band 2 befindlicher Aufzeichnungen ausschließt.

Ist also dann die aktuelle Bandposition gemäß Schritt 104 gleich/geringer oder wie im anderen Fall gemäß Schritt 105, wenn der Start gemäß Schritt 100 zum Anfahren von durch Markierungen 4 gekennzeichneten Aufzeichnungsabschnitten vom Bandanfang her bzw. vor der Bezugsmarkierung 3 erfolgt ist, gleich/größer als zwei Minuten zur Zielposition, erfolgt in beiden Fällen durch weiteres Rückspulen gemäß Schritt 106 und Abfrage gemäß Schritt 107 die Suche nach der Markierung 3, die entsprechend der Erfindung als Bezugs- und/oder Ausgangsmarkierung für die weiteren abschnittsweisen Markierungen 4 z.B. eine Viss-Marke sein kann. Die Suche nach der Bezugsmarkierung 3 erfolgt dadurch, daß die Laufwerksteuerungseinrichtung automatisch vom Vergleich von Bandzählerständen auf die Detektion der Bezugsmarke 3 umschaltet.

Sobald die Bezugsmarke 3 detektiert worden ist, wird, wie mit Schritt 109 dargestellt, der Bandzähler auf den gespeicherten, der Bezugsmarke 3 zugeordneten Bandzählerstandswert gesetzt. Von diesem Zählerstand aus wird, wie mit Schritt 111 dargestellt, zum Markieren abschnittsweiser Markierungen 4 und/oder Abspeichern von diesen Markierungen 4 entsprechenden Bandzählerständen gestartet, oder es kann im Falle bereits vorhandener abschnittsweiser Markierungen 4 bzw. entsprechender abgespeicherter Bandzählerstände mit einer entsprechenden Wiedergabe einschließlich dem Überspringen unerwünschter Aufzeichnungsabschnitte begonnen werden.

Konnte jedoch, wie mit Schritt 107 dargestellt, die Bezugsmarke 3 nicht detektiert werden, wird zunächst durch Abfrage gemäß Schritt 108 automatisch kontrolliert, ob die aktuelle Bandposition innerhalb oder außerhalb des 4-minütigen Toleranzfensters 5 liegt. Liegt die Bandposition innerhalb dieses Toleranzfensters 5 und kann die Bezugsmarke 3, z.B. aufgrund einer Bandbeschädigung, dennoch nicht gefunden bzw. detektiert werden, wird gemäß Schritt 110 der Vorgang abgebrochen. In einem solchen Fall kann dann ein erneuter Suchvorgang für die Bezugsmarkierung 3 gestartet werden. Wird dabei die Bezugsmarkierung 3 wiederum nicht detektiert, kann ein neuer Suchvorgang gemäß obigem Verfahren eingeleitet werden, wobei z.B. eine der abschnittsweisen Markierungen 4 als neue Bezugsmarkierung verwendet wird.

Liegt bei Schritt 108 die aktuelle Bandposition außerhalb des Toleranzfensters 5, wird (je nach Bandantriebsrichtung, mit der die Zielposition angefahren wird) weiter rück- oder vorgespult, bis das Toleranzfenster 5 erreicht wird bzw. bis die Differenz zwischen dem der aktuellen Bandposition entsprechenden Bandzählerstand und dem Bandzählerstandswert der Zielposition gleich/geringer bzw. gleich/größer (wenn man sich vom Bandanfang her der Zielposition nähert) als die der 2-minütigen Normalwiedergabe entsprechenden Bandzählerstandsdifferenz ist, und dann dem Flußdiagramm entsprechend bei Schritt 106 mit der Detektion der Bezugsmarke 3 weiter verfahren.

## Patentansprüche

1. Gerät mit einem bandförmigen Speicherträger (2) zur Aufzeichnung und/oder Wiedergabe von Informationen und von einem Signal für Steuenulgszwecke, das zusammen mit den Informationen aufgezeichnet wird,
mit einem Bandwickelantrieb, einem Bandzähler und einem durch das Signal für Steuerungszwecke aktualisierbaren statischen Speicher zum Abspeichern von Bandzählerständen für ein selektives Anfahren ausgewählter Abschnitte und/oder Stellen der aufgezeichneten Informationen mittels Bandwickelantriebs,
wobei eine Einrichtung zum Kennzeichnen derartiger Informationen vorgesehen ist durch Markieren des Signals für Steuerungszwecke und Zuordnen zu Bandzählerstandswerten daraus resultierender Markierungen (3, 4),
und wobei eine der Markierungen (3, 4) Bezugsmarkierung (3) für das selektive Anfahren ausgewählter Abschnitte und/oder stellen einer Aufzeichnung ist, indem mit dieser vor dem selektiven Anfahren jeweils zu detektierenden Markierung (3) der Bandzähler auf den dieser Markierung (3) zugeordneten Bandzählerstandswert gesetzt wird, **dadurch gekennzeichnet,**
**dass** ein Toleranzfenster (5) zum Auffinden der Bezugsmarkierung (3) auf dem Aufzeichnungsträger (2) vorgesehen ist, das vorzugsweise symmetrisch zur Bezugsmarkierung (3) angeordnet ist und einer vorgebbaren Zählerstand- oder Spielzeitdifferenz entspricht, und
**dass**, das Gerät so ausgebildet ist, dass die Detektion der Bezugsmarkierung (3) nur von der Seite des Toleranzfensters (5) her erfolgt, wo der Bandzählerstand grösser als der Bandzählerstandswert der Zielposition plus der entsprechenden Zählerstanddifferenz des Toleranz fensters ist.

2. Gerät (1) nach Anspruch 1, **dadurch gekennzeichnet, dass** die ausgewählten Aufzeichnungsabschnitte und/oder Stellen als Zählerwert oder Restspielzeit des Speicherträgers (2) im statischen Speicher gespeichert sind.

## Claims

1. Machine including a storage medium (2) in form of a tape for recording and/or reproducing of information and of a signal for control purposes which is recorded together with the information,
including a tape winding driving apparatus, a tape-counter and a static memory which can be actuated by the signal for control purposes for storing of tape counter positions for a selective finding of selected tape sections and/or positions of the recorded information by means of a tape winding actuation,
wherein an apparatus is provided for marking information by marking of the signal for control purposes and allocation to tape counter position values of markings (3, 4) resulting therefrom,
and wherein one of said markings (3, 4) is a reference marking (3) for the selective finding of selected sections and/or positions of a record, wherein by means of said marking (3) to be detected before the respective selective finding the tape counter is set to the tape counter position value allocated to said marking (3), **characterized in that**
a tolerance window (5) for finding the reference marking (3) on the storage medium (2) is provided which preferably is arranged symmetrially to the reference marking (3) and which corresponds to a determinable counter position - or playing time difference and
that the machine is designed in such a way, that the detection of the reference marking (3) occurs only from the side of the tolerance window (5) where the tape counter position is higher than the tape counter position value of the target position plus the corresponding counter position difference of the tolerance window.

2. Machine (1) according to claim 1, **characterized in that** the selected recording sections and/or positions are stored in form of a counter value or remaining playing time of the storage medium (2) within the static memory.

## Revendications

1. Appareil avec support de stockage sous forme de bande (2) pour l'enregistrement et/ou la lecture d'informations et d'un signal à des fins de pilotage, qui est enregistré avec les informations,
avec un entraînement du bobinage de bande, un compteur de bande et une mémoire statique pouvant être mise à jour, à des fins de pilotage, pour mémoriser les positions du compteur de bande, pour un positionnement sélectif de sections et/ou de positions sélectionnées des informations enregistrées, au moyen d'un entraînement du bobinage de bande,
un dispositif pour caractériser ces types d'informations étant prévu par marquage du signal, à des fins de pilotage, et par association des valeurs de position du compteur de bande des repères qui en résultent (3, 4),
et l'un des repères (3, 4) étant le repère de référence (3) pour le positionnement sélectif de sections et/ou positions sélectionnées d'un enregistrement, dans lequel grâce à ce repère (3) à détecter à chaque fois avant le positionnement sélectif, le compteur de bande est réglé sur la valeur de position du compteur de bande associée à ce repère (3), **caractérisé en ce**
**qu'**une fenêtre de tolérance (5) pour retrouver le repère de référence (3) est prévue sur le support d'enregistrement (2) qui est placé de préférence de façon symétrique au repère de référence (3) et qui correspond à une différence prédéfinie de la position de compteur ou du temps de lecture, et
en ce que l'appareil est conçu de sorte que la détection du repère de référence (3) s'effectue uniquement du côté de la fenêtre de tolérance (5), où la position du compteur de bande est supérieure à la valeur de la position cible du compteur de bande plus la différence de position de compteur correspondante de la fenêtre de tolérance.

2. Appareil (1) selon la revendication, **caractérisé en ce que** les sections d'enregistrement et/ou les positions sélectionnées sont mémorisées dans la mémoire statique comme valeur de compteur ou temps de lecture restant du support de stockage (2).
